# NOUVEAU FASCICULE DE BREVET EUROPEEN

(11) **EP 0 296 918 B2**
(45) Date de publication et mention de la décision concernant l'opposition: **06.07.1994**
(45) Mention de la délivrance du brevet: 22.08.1990
(21) Numéro de dépôt: 88401402.8
(22) Date de dépôt: 09.06.1988
(51) Int. Cl.: F16L 33/02

(54) **Collier de serrage métallique perfectionné**
Schlauchbinder aus Metall
Metal clamping collar

(30) Priorité: 22.06.1987 FR 8708725
(43) Date de publication de la demande: 28.12.1988
(73) Titulaire: Etablissements CAILLAU, F-92130 Issy-les-Moulineaux (FR)
(72) Inventeur: Calmettes, Lionel, F-41200 Romorantin (FR); Andre, Michel, F-41200 Romorantin (FR)
(74) Mandataire: Descourtieux, Philippe

(56) Documents cités:
- EP-A- 0 003 192
- EP-A- 0 243 224
- CH-A- 437 926
- DE-A- 1 500 795
- DE-C- 1 525 495
- FR-A- 0 003 192
- FR-A- 2 470 275
- GB-A- 1 064 048
- GB-A- 2 112 444
- US-A- 2 614 304
- US-A- 3 082 498
- US-A- 3 475 793
- US-A- 3 523 337

## Description

La présente invention vise a apporterdes perfec- tionnements aux colliers de serrage, par exemple, faisant I'objet du brevet EP-A-0 003 192 ou du brevet FR-A 2 428 163. Elle vise plus particulièrement à per- mettre de disposer, sur ce genre de collier, d'une ré- serve d'élasticité destinée a compenser le fluage du tube souple, notamment en caoutchouc, sur lequel le collier est serré en vue d'assurer sa fixation etanche sur un tuyau rigide.

En effet, le serrage d'un colliersur un tube souple provoque, notamment dans le cas ou ce dernier est soumis a des variations de temperature relativement importantes, le fluage du matériau qui le constitue. II peut ainsi en résulter que la force de serrage diminue par suite d'une diminution, même faible, du diamètre du tube a I'endroit ou se trouve le collier. Des risques de perte d'étanchéité du joint sont alors a craindre, dont les consequences peuvent être particulièrement graves sur certains matériels, notamment sur les vé- hicules automobiles.

D'autre part, il estquelquefois essentiel que l'utilisation des colliers en question ne conduise pas a des efforts trop importants sur le tube a serrer dont le diamètre peut varier dans certaines limites. II est donc souhaitable que les colliers de serrage comportent des moyens permettant de limiter I'effort de serrage lors du montage sur un tube souple dont le diamètre atteint la limite supérieure des tolerances admises.

On a déjà propose, notamment par les documents FR-A-2 470 275 et DE-A 1 500 795 des solutions aux problèmes qui viennent d'etre évoqués. Selon le premier document on prévoit, dans la bande constituant le collier, au moins une ondulation s'eten- dant sur toute la largeur de la bande et faisant saillie vers l'extérieur.

Cette ondulation, combinée a une rigidité conve- nable du metal constituant le collier, permet de confé- rer a ce dernier, après son montage et son serrage sur un tube souple, une capacité de déformer élasti- quement sa périphérie dans le sens d'une diminution de sa longueur, lui permettant ainsi de s'adapter a une diminution de la périphérie externe du tube tout en conservant une force de serrage suffisante sur ce dernier.

En outre, au moment du montage, l'ondulation constitue un limiteurde la force de serrage qui s'exer- ce sur la périphérie du tuyau.

Toutefois, la solution proposée ne donne pas en- tièrement satisfaction, en particulier s'il est impossible de placer entre l'ondulation et le tube souple a serrer une bande de metal assurant la continuity de I'effort de serrage sur toute la périphérie du tube.

Selon le deuxième document il est prévu, dans une zone éloignée des extrémités de la bande et des moyens de serrage et/ou d'accrochage, deux décou- pes longitudinales parallèles. Elles permettent de disposer entre deux ondulations situées en regard l'une de I'autre, une languette assurant approximati- vement la continuité de I'effort de serrage sur toute la périphérie du tube. Néanmoins la presence de cette languette diminue localement la section transver- sale utile de la bande constituant le collier.

L'invention vise a apporter des perfectionne- ments aux colliers du genre décrit dans le document FR-A-2 470 275 précité et énoncé dans le préambule de la revendication.

Selon l'invention, la bande présente, dans une zone éloignée desdites extrémités, une separation longitudinale définissant deux portions de bande parallèles l'une a I'autre et munies chacune d'au moins une ondulation, la separation étant obtenue au moyen d'une seule coupe longitudinale de manière que lesdites portions soient ainsi contiguës l'une a I'autre, chaque ondulation de l'une des portions de bande étant décalée circonférentiellement par rapport a chaque ondulation de I'autre portion de bande.

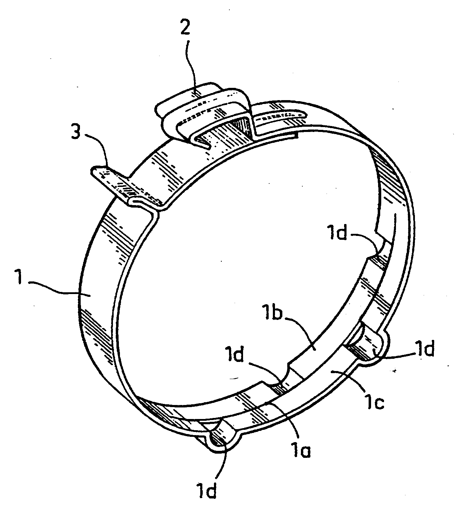

L'invention sera mieux comprise et ses avanta- ges apparaîtront au cours de la description qui va sui- vre d'un mode de realisation donné uniquement a titre d'exemple. Acet effet, on se référera au dessin an- nexée dans lequel la figure unique représente une vue en perspective d'un collier perfect"ionne, selon I'invention, a l'etat non serré.

Si I'on se reporte au dessin, on voit un collier du type de celui décrit dans le brevet EP-A 0 003 192. II est constitué par une bande métallique 1 dont les deux extrémités sont pourvues de moyens complémentaires de serrage et/ou d'accrochage désignés par les references générales 2 et 3.

Dans une zone éloignée des moyens d'accrocha- ge 2 et 3, la bande 1 présente une découpe longitudinale 1a definissant deux portions de bande 1b et 1c parallèles et contiguës l'une a I'autre.

II est cependant avantageux que la découpe soit située dans I'axe longitudinal de la bande définissant deux portions de même largeur et qu'elle soit prati- quée de telle façon qu'elle ne donne pas lieu a I'apparition d'une fente, laquelle risquerait de diminuer la capacité de serrage du collier.

Sur chacune des portions de bande 1b et 1c est prévue au moins une ondulation 1d ; de preference et comme représenté au dessin, il sera prévu au moins deux ondulations. Ainsi qu'on le voit, chaque ondulation 1d s'etend sur toute la largeur des portions de bande 1b et 1c et toutes les ondulations 1d sont de preference identiques. Cependant, chaque ondulation 1d d'une portion de bande est décalée dans le sens de la périphérie du collier, par rapport a toutes les ondulations 1d de I'autre portion de bande.

Le serrage du collier s'effectue, ainsi qu'on le sait, par le rapprochement des moyens de serrage 2 et 3 et la cooperation des crochets qu'ils comportent.

Au cours de cette operation, les ondulations 1d se déforment légèrement, de façon élastique, et s'aplatissent.

Si pendant l'utilisation le matériau du tube souple serré vient a fluer, les ondulations 1d tendent a re- prendre leur forme initiale visible sur la figure, main- tenant ainsi le serrage du tube a une valeur convena- ble.

Mais quel que soit létat de deformation des ondulations, la continuité du serrage est maintenue sur toute la périphérie du tube souple, grace a la disposition en quinconce des ondulations 1d de chaque portion de bande 1b et 1c.

En outre, on peut soulignerque la multiplicité des ondulations 1d sur chaque portion de bande permet de limiter leur saillie vers l'extérieur tout en conservant une capacité importante d'allongement et, par consequent, de retraction de la bande en cas de diminution du diametre du tube a serrer sous I'effet du fluage.

Enfin, la déformabilité des ondulations permet, ainsi qu'on le sait, une limitation de I'effort de serrage, au cas ou le diametre du tube souple atteint la limite superieure des tolerances admises. On évite ainsi, au moment de la mise en place du collier, I'apparition de forces trop importantes, aussi bien sur le tube lui-même que sur les organes de serrage et/ou d'accrochage 2 et 3.

## Revendications

1. Tightening clamp constituted by a metal band (1) wound on itself, comprising complementary tightening and hooking means (2, 3) in the vicinity of each of its ends, and presenting in a zone remote from said ends, a longitudinal separation defin- ing two parallel band sections, each one being provided with at least one corrugation projecting outwardly of the clamp, characterized in that the separation in two band sections (1b, 1c) is ob- tained by only one longitudinal cut (1a) so that said sections are thus contiguous one with respect to the other and in that each corrugation of one of the band sections (1b) is offset circumfer- entially with respect to each corrugation (1d) of the other band section (1c).

## Claims

1. Collier de serrage constitué par une bande métallique enroulée sur elle-même, comprenant des moyens complémentaires de serrage et d'accro- chage (2, 3) au voisinage de chacune de ses extrémités et comportant au moins deux ondulations faisant saillie vers l'extérieur du collier, ca- ractérisé en ce que, dans une zone éloignée desdites extrémités, la bande presente une sépara- tion longitudinale définissant deux portions de bande (1b, 1c) parallèles l'une a I'autre et munies chacune d'au moins une ondulation (1d), la separation étant obtenue au moyen d'une seule coupe longitudinale (1a) de manière que lesdites portions soient ainsi contiguës l'une a I'autre, chaque ondulation de l'une des portions de bande (1b) étant décalée circonférentiellement par rapport a chaque ondulation de I'autre portion de bande (1c).

## Patentansprüche

1. Schlauchklemme, bestehend aus einem aufgerollten Metallband (1), welches komplementäre Klemm- und Verhakungsmittel (2, 3) nahe jedem Ende umfaßt und in einer entfernte Zone der Enden eine Längstrennung aufweist, die zwei zueinander parallele Bandabschnitte festlegt, welche jeweils mit mindestens einer von der Schlauchklemme nach außen abstehenden Wellung versehen sind, dadurch gekennzeichnet, daß die Trennung in zwei Bandabschnitte (1 b, 1c) durch einen einzigen Längsschnitt (1 a) derart erzielt ist, daß besagte Abschnitte aneinanderstoßen und daß jede Wellung eines der Bandabschnitte (1b) gegenüber jeder Wellung (1d) des anderen Bandabschnitts (1c) in Umfangsrichtung versetzt ist.
